# FASCICULE DE BREVET EUROPEEN

(11) **EP 2 058 191 B1**
(45) Date de publication et mention de la délivrance du brevet: **13.10.2010**
(21) Numéro de dépôt: 08019349.3
(22) Date de dépôt: 05.11.2008
(51) Int. Cl.: B60T 11/232

(54) **Maître-cylindre d'un véhicule relié à un dispositif de freinage annexe**
Hauptbremszylinder eines Fahrzeugs, der mit einer Bremsvorrichtung verbunden ist
Master cylinder of a vehicle connected to a braking device

(30) Priorité: 06.11.2007 FR 0707809
(43) Date de publication de la demande: 13.05.2009
(73) Titulaire: Robert Bosch GmbH, 70442 Stuttgart (DE)
(72) Inventeur: Labarre, Jérémy, 77600 Guermantes (FR); Bourgois, Lionel, 95880 Enghien Les Bains (FR); Bourlon, Philippe, 77230 Dammartin en Goele (FR); Brahmi, Omar, Suzhou Jiangsu 215006 (CN); Rault, Dominique, 95330 Domont (FR); Noblet, Marc, 75012 Paris (FR); Nen, Yannick, 91290 Arpajon (FR)
(74) Mandataire: Hurwic, Aleksander Wiktor

(56) Documents cités:
- EP-A- 1 767 423
- WO-A-02/064410
- FR-A- 2 863 996

## Description

L'invention concerne un maître cylindre d'un véhicule relié à un dispositif de freinage annexe. On entend par dispositif de freinage annexe, un dispositif qui est greffé sur le maître cylindre en vue de prélever un fluide hydraulique dans ce même maître cylindre, Dans un exemple, le dispositif de freinage annexe peut être du type E.S.P. (Electronic Stability Program ou Correcteur Electronique de Trajectoire) ou du type A.B.S. (ou Anti lock Brake System ou système d'antiblocage de freinage). Le but de l'invention est d'obtenir un maître cylindre présentant un faible coût de fabrication. L'invention est plus particulièrement destinée au domaine de l'automobile mais pourrait s'appliquer dans d'autres domaines.

Le maître cylindre permet d'envoyer un fluide hydraulique ou liquide de frein sous pression en direction de freins d'un véhicule, ce qui a pour but d'entraîner un freinage du véhicule, voire un arrêt du véhicule par blocage d'une rotation d'au moins une roue du véhicule. Il est connu des maîtres cylindres tandem comportant un piston primaire et un piston secondaire coulissant chacun dans un alésage du maître cylindre. Le piston primaire et le piston secondaire définissent dans l'alésage une chambre primaire et une chambre secondaire respectivement. La chambre primaire et la chambre secondaire sont reliées respectivement à un réservoir hydraulique primaire et à un réservoir hydraulique secondaire. Chacun des réservoirs contient du liquide de frein pour remplir la chambre correspondante.

Le réservoir primaire et le réservoir secondaire communiquent avec la chambre primaire et la chambre secondaire respectivement via un conduit primaire et via un conduit secondaire. Le conduit primaire et le conduit secondaire sont creusés dans un corps du maître cylindre. Le conduit primaire et le conduit secondaire débouchent dans l'alésage du maître cylindre.

Le piston primaire et le piston secondaire comportent un orifice primaire et un orifice secondaire respectivement. Chacun de ces orifices est creusé dans la matière formée par le piston correspondant. Chacun de ces orifices débouche par une première extrémité en regard d'une paroi délimitée par alésage du maître cylindre et par une deuxième extrémité dans une chambre correspondante.

Le long de la paroi du maître cylindre, sont positionnés un joint d'étanchéité primaire et un joint d'étanchéité secondaire. Le joint primaire et le joint secondaire contrôlent un écoulement du liquide de frein depuis le réservoir primaire et le réservoir secondaire jusque dans la chambre primaire et dans la chambre secondaire respectivement via l'orifice primaire et via l'orifice secondaire. Le joint primaire et le joint secondaire contrôlent l'écoulement du liquide de frein en fonction de la position du piston primaire et du piston secondaire dans l'alésage. **De tels maitres-cylindres sont décrits dans la demande de brevet** EP 1767 423 A1**.**

Comme précédemment mentionné, il est connu des dispositifs de freinage annexes qui sont greffés sur le maître cylindre. Ces dispositifs de freinage annexes prélèvent du liquide de frein à partir du maître cylindre. L'E.S.P. permet de contrôler une rotation de chacune des roues du véhicule indépendamment les unes des autres. L'A.B.S. permet de débloquer la rotation d'une roue du véhicule face à un obstacle particulier.

Pour faire fonctionner le dispositif E.S.P. par exemple, le liquide de frein peut être prélevé directement à partir d'un des réservoirs de liquide de frein du maître cylindre. Pour prélever ce liquide de frein, une ouverture peut être réalisée au travers de ce réservoir. Or, cette ouverture peut être à l'origine de fuites de liquide de frein ou de chute de pression. De telles fuites ou de telles chutes de pression peuvent entraîner un freinage plus lent. Ou même, de telles fuites ou de telles chutes de pression peuvent entraîner une difficulté pour arrêter le véhicule rapidement.

Il est aussi possible de prélever ce liquide à partir du conduit primaire et/ou du conduit secondaire. Pour ce faire, une section de passage de chacun des conduits peut être augmentée pour obtenir un débit suffisamment important. Mais, en augmentant une telle section de passage, on risque d'allonger une course morte du piston correspondant. Par course morte du piston correspondant, on entend une durée nécessaire au piston pour que le piston soit déplacé depuis une position initiale de repos jusqu'à une position où un début de pression est obtenu sur le liquide de frein contenu dans la chambre correspondante.

Il est également connu de réaliser par usinage des rainures le long de la paroi du maître cylindre. Ces rainures sont réalisées sous forme d'hélices le long de cette paroi. De telles rainures peuvent être remplies de liquide de frein qui peut être prélevé par le dispositif E.S.P.. Cependant, la réalisation de ces rainures le long de la paroi du maître cylindre pose des problèmes de fabrication, notamment la réalisation de telles hélices augmente notablement le coût de fabrication d'un tel maître cylindre.

Pour résoudre ces problèmes, l'invention prévoit de creuser radialement le piston sur une circonférence du piston, de manière à former un renfoncement. Ce renfoncement est réalisé en amont de l'orifice selon une direction d'avancée du piston en phase de freinage.

De préférence, le piston comporte un premier renfoncement et un deuxième renfoncement se succédant selon la direction d'avancée du piston en phase de freinage. Ces premier et deuxième renfoncements sont réalisés de telle sorte qu'on obtienne une diminution d'un diamètre du piston selon la direction d'avancée du piston en phase de freinage. Le joint est amené à coopérer avec le piston en étant placé en appui contre le premier renfoncement et contre le deuxième renfoncement en fonction des différentes positions du piston dans l'alésage.

Ce premier renfoncement et ce deuxième renfoncement permettent de libérer un espace entre le piston correspondant et la paroi du maître cylindre. Du liquide de frein peut être stocké à l'intérieur de cet espace en vue d'être prélevé par le dispositif E.S.P. tel que ci-dessus déjà décrit.

Le premier renfoncement permet d'alimenter le dispositif E.S.P. au tout début d'un retour en position de repos du piston correspondant. Le deuxième renfoncement permet d'obtenir un débit de liquide de frein suffisant pour alimenter l'E.S.P. lorsque le maître cylindre est en position de repos.

Le piston selon l'invention permet également que le retour à une pression initiale de repos de la chambre correspondante s'effectue de telle manière, qu'au cours de ce retour, très peu de bulles d'air se forment dans le liquide de frein contenu dans la chambre correspondante.

Le piston selon l'invention permet également que le retour à une pression initiale de repos de la chambre correspondante s'effectue de telle manière, qu'au cours de ce retour, le joint d'étanchéité correspondant ne s'extrude pas de son logement.

L'invention a donc pour objet un maître cylindre d'un véhicule automobile comportant :
- un corps creusé d'un alésage longitudinalement par rapport à un axe du maître cylindre,
- un réservoir de fluide hydraulique débouchant dans l'alésage du maître cylindre,
- un piston coulissant dans l'alésage et définissant une chambre du maître cylindre, le piston comportant un orifice débouchant d'une part en regard d'une paroi délimitée par l'alésage, et d'autre part débouchant dans la chambre, l'orifice recevant du fluide hydraulique provenant du réservoir, et
- un moyen d'étanchéité logé dans une gorge creusée dans la paroi, le moyen d'étanchéité contrôlant un passage du fluide hydraulique au travers de l'orifice par coopération du moyen d'étanchéité avec le piston, caractérisé en ce que
- le piston comporte au moins un renfoncement creusé en amont de l'orifice du piston selon une direction d'avancée du piston en phase de freinage, le joint coopérant avec le piston par l'intermédiaire du renfoncement.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une coupe longitudinale d'un maître cylindre tandem, selon l'invention ;
- Figure 2: une représentation partielle d'un maître cylindre en position de repos, selon l'invention, et
- Figure 3 : une représentation graphique d'une pression à l'intérieur d'une chambre du maître cylindre en fonction d'une position d'un piston correspondant dans un alésage du maître cylindre, selon l'invention.

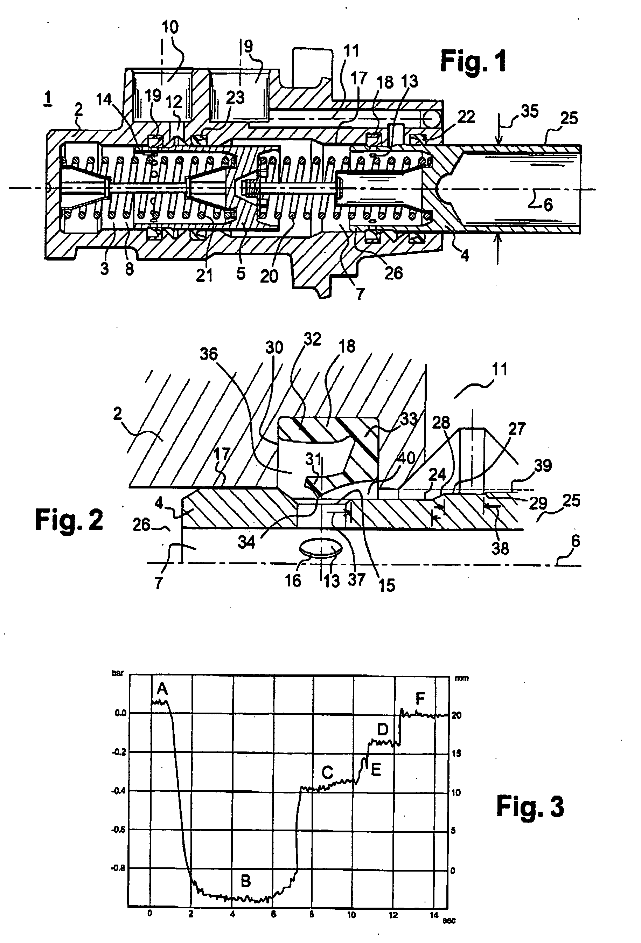

La figure 1 illustre un maître cylindre 1 d'un véhicule automobile, selon l'invention. Ici, il s'agit d'un maître cylindre tandem. Mais invention pourrait également s'appliquer à un maître cylindre simple. Le maître cylindre 1 selon la figure 1 comporte un corps 2 creusé d'un alésage 3. Le maître cylindre 1 comporte également un piston primaire 4 et un piston secondaire 5. Le piston primaire 4 est relié à une tige de poussée qui est elle-même reliée à une pédale de frein du véhicule (non représentée). Le piston primaire 4 et le piston secondaire 5 coulissent dans l'alésage 3 longitudinalement par rapport à un axe 6 du maître cylindre. L'axe 6 du maître cylindre est un axe le long duquel coulisse le piston primaire 4 et le piston secondaire 5 lors de phases de freinage ou de défreinage du maître cylindre. Le piston primaire 4 et le piston secondaire 5 définissent respectivement une chambre primaire 7 et une chambre secondaire 8. Le maître cylindre 1 comporte également un réservoir primaire 9 de fluide hydraulique et un réservoir secondaire 10 de fluide hydraulique. Chacun de ces réservoirs 9 et 10 débouche dans l'alésage 3 du maître cylindre pour remplir la chambre primaire 7 et la chambre secondaire 8. Le réservoir primaire 9 débouche dans la chambre primaire 7 par l'intermédiaire d'un conduit primaire 11 qui est creusé au travers du corps 2 du maître cylindre. Le réservoir secondaire 10 débouche dans la chambre secondaire 8 par l'intermédiaire d'un conduit secondaire 12 qui est également creusé au travers du corps 2 du maître cylindre.

Le piston primaire 4 et le piston secondaire 5 comportent un orifice primaire 13 et un orifice secondaire 14 respectivement. Dans l'exemple figure 2, l'orifice primaire 13 comporte une première ouverture 15 et une deuxième ouverture 16. L'orifice primaire 13 débouche par la première ouverture 15 en regard d'une paroi 17 délimitée par l'alésage 3 du maître cylindre et, par la deuxième ouverture 16, dans la chambre primaire 7. Il en est de même pour l'orifice secondaire 14. Le fluide hydraulique ou liquide de frein circule au travers de l'orifice correspondant depuis la première ouverture 15 en direction de la deuxième ouverture 16.

Le liquide de frein circule depuis le réservoir primaire 9 jusque dans la chambre primaire 7 via le conduit primaire 11 et via l'orifice primaire 13. Le liquide de frein circule également depuis le réservoir secondaire 10 jusque dans la chambre secondaire 8 via le conduit secondaire 12 et via l'orifice secondaire 14.

Le maître cylindre 1 comporte également un joint d'étanchéité primaire 18 et un joint d'étanchéité secondaire 19. Chacun de ces joints est susceptible d'obturer un passage du liquide de frein depuis le réservoir correspondant jusque dans la chambre correspondante par coopération du joint avec le piston correspondant.

Le piston primaire 4 et le piston secondaire 5 coulissent dans l'alésage 3 du maître cylindre tout en étant ramenés respectivement en position de repos par un ressort de rappel primaire 20 et un ressort de rappel secondaire 21. La chambre primaire 7 est isolée de l'extérieur par une coupelle d'étanchéité primaire 22 et la chambre secondaire 8 est isolée de la chambre primaire 7 par une coupelle d'étanchéité secondaire 23.

La figure 2 représente une vue partielle du maître cylindre 1 en coupe longitudinale par rapport à l'axe 6. Cette vue partielle représente le piston primaire 4 à un endroit où est situé le joint primaire 18. Selon l'invention, le piston primaire 4 est creusé à un endroit destiné à coopérer avec le joint primaire 18 d'au moins un renfoncement 24, figure 2. Il en est de même pour le piston secondaire 5. Le piston primaire 4 est creusé radialement sur une circonférence du piston primaire 4 pour former le renfoncement 24. Ce renfoncement est situé en amont de l'orifice primaire 13 selon une direction d'avancée du piston primaire 4 en phase de freinage. La direction d'avancée du piston primaire 4 en phase de freinage est parallèle à l'axe 6 du maître cylindre et correspond à une direction de déplacement du piston primaire 4 depuis la tige de poussée vers le piston secondaire 5, longitudinalement par rapport à l'axe 6 du maître cylindre lors de la phase de freinage du maître cylindre.

Plus précisément, le piston primaire 4 comporte depuis une extrémité avant 26 jusqu'à une extrémité arrière 25 du piston 4 relativement longitudinalement à un axe du piston primaire 4, un premier renfoncement 24 et un deuxième renfoncement 27. L'extrémité arrière 25 correspond à un endroit du piston primaire 4 destiné à coopérer avec la tige de poussée. L'extrémité avant 26 correspond à un endroit du piston primaire 4 destiné à être éloigné de la tige de poussée et destiné à être placé en regard du piston secondaire 5. L'axe du piston primaire 4 est axe coaxial à l'axe 6 du maître cylindre.

Le premier renfoncement 24 et le deuxième renfoncement 27 sont réalisés sur une première circonférence et sur une deuxième circonférence respectivement du piston.

Le premier renfoncement 24 et le deuxième renfoncement 27 forment une première superficie et une deuxième superficie. La première superficie et la deuxième superficie forment chacune un cône dont la pointe est dirigée selon la direction d'avancée du piston primaire en phase de freinage. Le premier renfoncement 24 est relié au deuxième renfoncement 27 par une première surface de liaison 28. Le deuxième renfoncement 27 est relié d'une part, à la première surface de liaison 28, et est relié d'autre part, à une deuxième surface de liaison 29. La deuxième surface de liaison 29 est une surface qui relie le deuxième renfoncement 27 à un reste d'une surface 39 du piston primaire 4. Un reste de la surface 39 du piston primaire 4 correspond à une surface du piston primaire 4 qui s'étend depuis la deuxième surface de liaison 29 jusqu'à l'extrémité arrière 25 du piston 4. La première surface de liaison 28 et la deuxième surface de liaison 29 sont inclinées ou chanfreinées. La première surface de liaison 28 et la deuxième surface de liaison 29 forment respectivement une troisième superficie et une quatrième superficie. La troisième et la quatrième superficie forment chacune un cône dont la pointe est orientée selon la direction d'avancée du piston primaire en phase de freinage.

Le premier renfoncement 24 est réalisé à partir de l'orifice primaire 13. Puis le deuxième renfoncement 27 est réalisé à partir de la première surface de liaison 28.

Le joint primaire 18, comme le joint secondaire 19 sont en forme de U. Un tel joint primaire 18 est placé autour du piston primaire 4 et autour de l'axe du piston primaire 4. Le joint primaire 18 est logé dans une gorge primaire 30 creusée dans la paroi 17 du maître cylindre. Le joint primaire 18 comporte une lèvre interne 31, une lèvre externe 32, et une couronne radiale intermédiaire 33 reliant la lèvre interne 31 à la lèvre externe 32. La lèvre interne 31 et la lèvre externe 32 délimitent entre elles un trou 36 dirigé vers le piston secondaire 5. La lèvre interne 31 est destinée à être placée en appui contre le piston primaire 4. La lèvre externe 32 est destinée à être placé en appui dans la gorge primaire 30 contre la paroi 17. La couronne intermédiaire 33 est plaquée contre la paroi 17 dans la gorge primaire 30 également. La lèvre interne 31 forme un cône dont la pointe est dirigée selon la direction d'avancée du piston primaire 4 en phase de freinage. Cette lèvre interne 31 comporte une protubérance 34 s'étendant le long de la lèvre interne 31 et s'élevant perpendiculairement à un plan formé par cette lèvre interne 31. Cette protubérance 34 permet d'optimiser une course morte du piston primaire. On entend par course morte du piston primaire, une distance que doit parcourir le piston primaire longitudinalement par rapport à l'axe 6 depuis une position de repos jusqu'à une position où le joint primaire obture le passage du liquide de frein. Cette distance est calculée pour être la plus réduite possible de manière à ce que lorsqu'on appuie sur la pédale de frein, on obtienne un freinage relativement rapide.

En position de repos du maître cylindre, le piston primaire 4 est positionné dans l'alésage du maître cylindre de telle manière que la lèvre interne 31 du joint primaire 18 est placée en regard de l'orifice primaire 13. Le liquide de frein circule librement depuis le réservoir primaire 9 jusque dans la chambre primaire 7 en s'insinuant entre la paroi 17 et le piston primaire 4 et/ou en circulant au travers de l'orifice primaire 13.

Puis au moment d'un freinage du véhicule, c'est-à-dire lorsque la pédale de frein est actionnée, le piston primaire 4 est enfoncé en direction du piston secondaire 5 longitudinalement par rapport à l'axe 6 du maître cylindre. Au cours de cet enfoncement, le piston primaire 4 glisse contre la protubérance 34 de la lèvre interne 31. La protubérance 34 est d'abord placée en appui contre le premier renfoncement 24, Dès que la protubérance 34 est placée en appui contre le premier renfoncement 24, la communication entre le réservoir primaire 9 et l'orifice primaire 13 est coupée car le joint primaire 18 est situé entre l'orifice primaire 13 et le conduit primaire 11. De même, la communication ayant lieu entre la paroi 17 et le piston primaire 4 est coupée.

Puis, au cours du déplacement du piston primaire 4 en direction du piston secondaire 5, le joint primaire 18 est situé en appui par sa protubérance 34 contre la première surface de liaison 28, puis contre le deuxième renfoncement 27, puis contre la deuxième surface de liaison 29 et enfin éventuellement contre le reste de la surface 39 du piston primaire 4. Au cours de ce déplacement du piston primaire, la lèvre interne 31 tend à être rapprochée de la lèvre externe 32. Il se produit une augmentation du serrage du joint primaire 18 du fait d'une augmentation d'un diamètre 35 du piston primaire 4 depuis le premier renfoncement 24 en direction du deuxième renfoncement 27.

Au moment du défreinage ou relâchement de la pédale de frein, le piston primaire 4 revient en position initiale de repos. En revenant en position initiale de repos, le piston primaire 4 est déplacé de telle manière que la lèvre interne 31 du joint primaire 18 se situe en appui contre la deuxième surface de liaison 29, puis contre le deuxième renfoncement 27, puis contre la première surface de liaison 28, puis contre le premier renfoncement 24 et enfin se retrouve en regard de l'orifice primaire 13. A ce moment là, le liquide de frein peut à nouveau s'infiltrer dans la chambre primaire 7 en passant entre la paroi 17 et le piston primaire 4 et/ou en passant au travers de l'orifice primaire 13. Au cours de ce retour en position initiale de repos, la lèvre interne 31 tend à être écartée de la lèvre externe 32. Il se produit une diminution du serrage du joint primaire 18, La lèvre interne 31 tend à être écartée de la lèvre externe 32 du fait d'une diminution du diamètre 35 du piston primaire 4 depuis le deuxième renfoncement 27 en direction du premier renfoncement 24.

Au cours du retour en position initiale de repos du piston primaire 4, il se produit un remplissage progressif en liquide de frein d'un espace 40 délimité par le premier renfoncement 24, le deuxième renfoncement 27, la paroi 17, et le joint primaire 14.

Le liquide de frein stocké dans cet espace 40 peut être justement prélevé par un dispositif de freinage autre que le maître cylindre. En effet, dans un exemple, un dispositif E.S.P. (ou Electronic Stability Program ou Correcteur électronique de trajectoire) ou un dispositif A.B.S. (Anti lock Block System ou système d'antiblocage de freinage) peut être greffé sur le maître cylindre. Le dispositif E.S.P. permet de contrôler une rotation des roues du véhicule indépendamment les unes des autres. Le dispositif A.B.S. permet de débloquer les roues du véhicule face à des obstacles particuliers.

Le premier renfoncement 24 et le deuxième renfoncement 27 comportent une première longueur 37 et une deuxième longueur 38 respectivement. La première longueur 37 est réalisée de telle manière qu'une quantité de liquide de frein qui est stockée entre le premier renfoncement 24 et la paroi 17 est suffisante pour faire fonctionner le dispositif E.S.P. alors que le maître cylindre est en position de repos.

La deuxième longueur 38 du deuxième renfoncement 27 correspond à une distance que doit parcourir le piston primaire 4 pour effectuer deux tiers d'une course de défreinage. On entend par course de défreinage du piston primaire 4, une durée nécessaire au piston primaire 4 pour que le piston primaire 4 soit déplacé dans l'alésage depuis une première position correspondant à une position où les roues du véhicule sont freinées ou arrêtées jusqu'à une deuxième position pour laquelle le piston primaire 4 est de nouveau en position initiale de repos. Lorsque le piston primaire 4 est positionné par rapport à l'alésage à deux tiers de la course défreinage, le joint primaire est placé en appui contre le piston primaire 4 à une jonction. Un volume de liquide de frein peut alors être stocké entre le joint primaire 18, le deuxième renfoncement 27, la deuxième surface de liaison 29 et la paroi 17. Ce volume de liquide de frein permet d'alimenter le dispositif E.S.P. alors que le piston primaire 4 n'est pas encore revenu à sa position initiale de repos.

Pour éviter que le joint primaire 18 ne s'extrude de la gorge primaire 30 et que des bulles d'air ne se forment dans la chambre primaire 7 lors du retour en position initiale de repos du piston primaire 4, les surfaces de liaisons 28 et 29 sont chanfreinées ou inclinées. En effet, la forme chanfreinée des surfaces de liaisons 28 et 29, permet à la lèvre interne 31 tend à être déplacée progressivement en direction de la lèvre externe 32 ou en direction opposée à la lèvre externe 32. Un retour à une pression initiale de repos du maître cylindre s'effectue relativement linéairement et progressivement en fonction du temps au moment d'un freinage brusque ou d'un relâchement de la pédale de frein,

La figure 3 illustre sous forme d'un graphique une évolution de la pression régnant dans la chambre primaire 7 en fonction du temps et en fonction de la position du piston primaire 4 selon l'invention dans l'alésage. En A est représentée la pression régnant à l'intérieur de la chambre primaire lorsque le piston primaire est en position de repos. Elle est de 0,04 bar environ. En B est représentée la pression régnant dans la chambre primaire 7 lorsque le piston primaire 4 est en position de freinage. Elle est de -0,98 bar environ. A C et D, est représentée la pression régnant dans la chambre primaire 7 lorsque le piston primaire 4 est en position de défreinage. Elle est de -0,38 bar environ à C et de -0,16 bar environ à D. La pression régnant dans la chambre primaire 7 évolue par paliers depuis C vers D, le premier palier étant le palier C et le deuxième palier étant le palier D. Au palier C est représentée plus particulièrement la pression hydraulique régnant dans la chambre primaire 7 lorsque le piston primaire 4 est placé par rapport au joint primaire 18 avec le joint primaire 18 en appui contre le deuxième renfoncement 27. Au palier D est représentée plus particulièrement la pression hydraulique régnant dans la chambre primaire 7 lorsque le piston primaire 4 est positionné par rapport au joint primaire 18 de telle sorte que le joint primaire 18 est placé en appui contre le premier renfoncement 24. A E est représenté un saut de pression qui se produit lorsque le piston primaire 4 est positionné avec le joint primaire 18 placé en appui contre la première surface de liaison 28. A F est représenté la pression hydraulique régnant dans la chambre primaire 7 lors du retour en position initiale de repos du piston primaire 4.

## Revendications

1. Maître cylindre d'un véhicule automobile comportant
- un corps (2) creusé d'un alésage (3) longitudinalement par rapport à un axe (6) du maître cylindre,
- un réservoir (9,10) de fluide hydraulique débouchant dans l'alésage du maître cylindre,
- un piston (4,5) coulissant dans l'alésage et définissant une chambre (7,8) du maître cylindre, le piston comportant un orifice (13,14) débouchant d'une part en regard d'une paroi (17) délimitée par l'alésage, et d'autre part débouchant dans la chambre, l'orifice recevant du fluide hydraulique provenant du réservoir, et
- un moyen d'étanchéité (18,19) logé dans une gorge creusée dans la paroi, le moyen d'étanchéité contrôlant un passage du fluide hydraulique au travers de l'orifice par coopération du moyen d'étanchéité avec le piston, **caractérisé en ce que** le piston comporte un premier renfoncement (24) et un deuxième renfoncement (27) qui sont réalisés en amont de l'orifice du piston selon la direction d'avancée du piston en phase de freinage, une diminution d'un diamètre (35) du piston étant obtenue depuis le premier renfoncement jusqu'au deuxième renfoncement.

2. Maître cylindre selon la revendication 1, **caractérisé en ce que** le piston (4,5) comporte une première surface de liaison (28) et une deuxième surface de liaison (29), la première surface (28) reliant le premier renfoncement (24) à un reste de surface du piston, la deuxième surface de liaison (29) reliant le premier renfoncement (24) au deuxième renfoncement (27), la première surface et la deuxième surface de liaison étant chanfreinées.

3. Maître cylindre selon l'une des revendications 1 à 2, **caractérisé en ce que** le premier renfoncement (24) et le deuxième renfoncement (27) forment respectivement une première superficie et une deuxième superficie, la première superficie et la deuxième superficie délimitant un cône, dont la pointe est dirigée selon la direction d'avancée du piston en phase de freinage.

4. Maître cylindre selon l'une des revendications 1 à 3, **caractérisé en ce que** le renfoncement (24) est réalisé à partir de l'orifice (13, 14).

5. Maître cylindre selon l'une des revendications 1 à 4, **caractérisé en ce que** le renfoncement (24) est réalisé sur une circonférence du piston (4,5).

## Claims

1. Master cylinder for a motor vehicle and comprising
- a body (2) in which a bore (3) is formed longitudinally with respect to an axis (6) of the master cylinder,
- a hydraulic fluid reservoir (9, 10) opening into the bore of the master cylinder,
- a piston (4, 5) sliding in the bore and defining a chamber (7, 8) of the master cylinder, the piston comprising a port (13, 14) opening, at one end, to face a wall (17) delimited by the bore, and, at the other end, opening into the chamber, the port receiving hydraulic fluid from the reservoir, and
- a sealing means (18, 19) housed in a groove formed in the wall, the sealing means controlling the passage of hydraulic fluid through the port through collaboration between the sealing means and the piston, **characterized in that** a first indentation (24) and a second indentation (27) are created upstream of the port of the piston in the direction of forward travel of the piston during the braking phase, a reduction in a diameter (35) of the piston being obtained from the first indentation to the second indentation.

2. Master cylinder according to claim 1, **characterized in that** the piston (4, 5) has a first connecting surface (28) and a second connecting surface (29), the first surface (28) connecting the first indentation (24) to a remainder of the surface of the piston, the second connecting surface (29) connecting the first indentation (24) to the second indentation (27), the first and second connecting surfaces being chamfered.

3. Master cylinder according to one of claims 1 to 2, **characterized in that** the first indentation (24) and the second indentation (27) respectively form a first surface area and a second surface area, the first surface area and the second surface area delimiting a cone, the tip of which points in the direction of forward travel of the piston during the braking phase.

4. Master cylinder according to one of claims 1 to 3, **characterized in that** the indentation (24) is formed starting from the port (13, 14).

5. Master cylinder according to one of claims 1 to 4, **characterized in that** the indentation (24) is formed over a circumference of the piston (4, 5).

## Patentansprüche

1. Hauptzylinder eines Kraftfahrzeugs, mit
- einem Körper (2), in dem in Bezug auf eine Achse (6) des Hauptzylinders eine Bohrung (3) der Länge nach ausgehöhlt ist,
- einem Hydraulikfluidbehälter (9, 10), der in die Bohrung des Hauptzylinders mündet,
- einem Kolben (4, 5), der in der Bohrung gleitet und eine Kammer (7, 8) des Hauptzylinders definiert, wobei der Kolben eine Öffnung (13, 14) aufweist, die zum einen gegenüber einer von der Bohrung begrenzten Wand (17) und zum anderen in die Kammer mündet, wobei die Öffnung das Hydraulikfluid aus dem Behälter aufnimmt, und
- einem Dichtmittel (18, 19), das in einer in der Wand ausgehöhlten Nut angeordnet ist, wobei das Dichtmittel einen Durchfluss des Hydraulikfluids durch die Öffnung durch Zusammenwirkung zwischen dem Dichtmittel und dem Kolben steuert, **dadurch gekennzeichnet, dass** der Kolben eine erste Verstärkung (24) und eine zweite Verstärkung (27) aufweist, die in Vorwärtsbewegungsrichtung des Kolbens bei einer Bremsphase stromaufwärts der Öffnung des Kolbens ausgebildet sind, wobei eine Verringerung des Durchmessers (35) des Kolbens von der ersten Verstärkung bis zur zweiten Verstärkung erhalten wird.

2. Hauptzylinder nach Anspruch 1, **dadurch gekennzeichnet, dass** der Kolben (4, 5) eine erste Verbindungsfläche (28) und eine zweite Verbindungsfläche (29) aufweist, wobei die erste Fläche (28) die erste Verstärkung (24) mit einer übrigen Fläche des Kolbens verbindet, die zweite Verbindungsfläche (29) die erste Verstärkung (24) mit der zweiten Verstärkung (27) verbindet und die erste und die zweite Verbindungsfläche abgeschrägt sind.

3. Hauptzylinder nach einem der Ansprüche 1 bis 2, **dadurch gekennzeichnet, dass** die erste Verstärkung (24) und die zweite Verstärkung (27) eine erste Oberflächenausdehnung bzw. eine zweite Oberflächenausdehnung bilden, wobei die erste Oberflächenausdehnung und die zweite Oberflächenausdehnung einen Kegel begrenzen, dessen Spitze in Vorwärtsbewegungsrichtung des Kolbens bei einer Bremsphase ausgerichtet ist.

4. Hauptzylinder nach einem der Ansprüche 1 bis 3, **dadurch gekennzeichnet, dass** die Verstärkung (24) ausgehend von der Öffnung (13, 14) ausgebildet ist.

5. Hauptzylinder nach einem der Ansprüche 1 bis 4, **dadurch gekennzeichnet, dass** die Verstärkung (24) auf einem Umfang des Kolbens (4, 5) ausgebildet ist.
